# EUROPEAN PATENT APPLICATION

(11) **EP 4 657 803 A1**
(43) Date of publication of application: **03.12.2025**
(21) Application number: 24179093.0
(22) Date of filing: 30.05.2024
(51) Int. Cl.: H04L 12/40

(54) **MODULE FOR CONNECTING TO A TRANSCEIVER, DEVICE AND METHOD FOR THE MODULE**

(71) Applicant: NXP B.V., 5656 AG Eindhoven (NL)
(72) Inventor: Elend, Bernd Uwe Gerhard, 5656 AG Eindhoven (NL); Jordan, Lukas Wolfgang Fred, 5656 AG Eindhoven (NL)
(74) Representative: Schmütz, Christian Klaus Johannes

(57) **Abstract**

The present disclosure relates to module comprising: a first transmit data input, TX input, a first receive data output, RX output, a first transmit data output, TXD output, and a first receive data input, RXD input, wherein the module is configured to be coupled to an Ethernet controller or a digital Ethernet Phy via the first TX input and the first RX output, wherein the module is configured to be coupled via the first TXD output and the first RXD input to a transceiver that can be coupled via a bus interface to bus lines, wherein the module is configured to receive, via the first RXD input, an RXD input signal representing a first Ethernet message, wherein the module is configured to detect a predefined first pattern of the first Ethernet message based on the RXD input signal, wherein the module is configured to generate, in response to the detection of the first pattern, a first instruction for the transceiver to change a detection threshold voltage for detecting a symbol from a first bus threshold voltage to a second bus threshold voltage, wherein the module is configured to detect a predefined second pattern of the first Ethernet message based on the RXD input signal, and wherein the module is configured to generate, in response to the detection of the second pattern, a second instruction for the transceiver to change the detection threshold voltage from the second bus threshold voltage to the first bus threshold voltage.

## Description

### TECHNICAL FIELD

The present disclosure relates to module for connecting to a transceiver, a device comprising the module and the transceiver, and a method for the module.

### BACKGROUND

CAN relates to a communication protocol that is often used within vehicles. The CAN protocol can be used to enable communications between various electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. The data link layer of the CAN protocol is standardized as International Standards Organization (ISO) 11898-1. The standardized CAN data link layer protocol is in the process of being extended to provide higher data rates. The CAN protocol has been updated to also cover for example flexible data rates, in particular referring to CAN Flexible Data-Rate or CAN FD and will be further updated to support even higher bit rates and a higher maximum amount of data, referring to CAN XL. Data link layer and physical coding sub-layer requirements of CAN XL are standardized as CiA 610 and in ISO 11898-1:2024.

10BASE10BASE-T1S is an automotive Ethernet network protocol developed as part of the IEEE 802.3cg 2019 standard published in 2020.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a module is provided, which comprises a first transmit data input, TX input, a first receive data output, RX output, a first transmit data output, TXD output, and a first receive data input, RXD input, wherein the module is configured to be coupled to an Ethernet controller or a digital Ethernet Phy via the first TX input and the first RX output, wherein the module is configured to be coupled via the first TXD output and the first RXD input to a transceiver that can be coupled via a bus interface to bus lines, wherein the module is configured to receive, via the first RXD input, an RXD input signal representing a first Ethernet message, wherein the module is configured to detect a predefined first pattern of the first Ethernet message based on the RXD input signal, wherein the module is configured to generate, in response to the detection of the first pattern, a first instruction for the transceiver to change a detection threshold voltage for detecting a symbol from a first bus threshold voltage to a second bus threshold voltage, wherein the module is configured to detect a predefined second pattern of the first Ethernet message based on the RXD input signal, and wherein the module is configured to generate, in response to the detection of the second pattern, a second instruction for the transceiver to change the detection threshold voltage from the second bus threshold voltage to the first bus threshold voltage.

In one or more embodiments, the first pattern of the first Ethernet message is a commit request symbol.

In one or more embodiments, the second pattern of the first Ethernet message is an End-of-Stream Delimiter, ESD, bit-pattern.

In one or more embodiments, the first bus threshold voltage is between 0.3 volts and 0.9 volts, and wherein the second bus threshold voltage is between -0.1 volts and 0.1 volts.

In one or more embodiments, the module is configured to transmit a TXD output signal via the first TXD output, wherein the module is configured to adapt the TXD output signal such that the TXD output signal represents the first and/or second instruction.

In one or more embodiments, the module comprises a first control interface, wherein the module is configured to generate a control signal representing the first and/or second instruction, wherein the module is configured to transmit the control signal via the first control interface.

In one or more embodiments, the module is configured to detect symbols of the RXD input signal at a detection frequency, wherein the module is configured to change, in response to the detection of the first pattern, the detection frequency from a first clock frequency to a second clock frequency, and wherein the module is configured to change, in response to the detection of the second pattern, the detection frequency from the second clock frequency to the first clock frequency.

In one or more embodiments, the first clock frequency is between 2 MHz and 7 MHz, and wherein the second clock frequency is between 8 MHz and 14 MHz.

In one or more embodiments, the module is configured to detect RXD-symbols of the RXD input signal, and wherein the module is configured to decode RXD-bits represented by the symbols of the RXD input signal based on a RXD-coding scheme.

In one or more embodiments, the module is configured to decode RXD-bits represented by the RXD input signal according to a/the RXD coding-scheme, wherein the module is configured to change, in response to the detection of the first pattern, the RXD coding-scheme from a first coding-scheme to a second coding-scheme, wherein the module is configured to change, in response to the detection of the second pattern, the RXD coding-scheme from the second coding-scheme to the first coding-scheme for decoding detected symbols of the RXD input signal.

In one or more embodiments, the module is configured to create an RX output signal based on the decoded RXD-bits, such that the RXD-bits are represented by the RX output signal according to the first coding-scheme, and wherein the module is configured to transmit the RX output signal via the RX output.

In accordance with a second aspect of the present disclosure, a device is provided, which comprises a transceiver, and a module according to any of the preceding claims, wherein the transceiver comprises a bus interface for connecting to bus lines, wherein the transceiver comprises a second TXD input coupled to the first TXD output of the module, wherein the transceiver comprises a second RXD output coupled to the first RXD input of the module, wherein the transceiver is configured to receive, via the bus interface, a bus signal representing the first Ethernet message, wherein the transceiver is configured to generate the RXD input signal such that the RXD input signal represents the first Ethernet message, wherein the transceiver is configured to transmit the RXD input signal to the first RXD input of the module via the second RXD output of the transceiver, wherein the transceiver is configured to receive the first instruction and the second instruction from the module, wherein the transceiver is configured to change a detection threshold voltage for detecting a symbol represented by the bus signal, wherein the transceiver is configured to change the detection threshold voltage from the first bus threshold voltage to the second bus threshold voltage in response to receiving the first instruction, and wherein the transceiver is configured to change the detection threshold voltage from the second bus threshold voltage to the first bus threshold voltage in response to receiving the second instruction.

In one or more embodiments, the first bus threshold voltage is between 0.3 volts and 0.9 volts, and wherein the second bus threshold voltage is between -0.1 volts and 0.1 volts.

In one or more embodiments, the transceiver is configured to receive the first and/or second instruction via the TXD output signal of the module at the second TXD input, or wherein the transceiver comprises a second control interface and is configured to receive the first and/or second instruction via the control signal of the module at the second control interface.

In accordance with a third aspect of the present disclosure, a method for a module is provided, wherein the module comprising a first transmit data input, TXD input, a first receive data output, RXD output, a first transmit data output, TXD output, and a first receive data input, RXD input, wherein the module is configured to be coupled to an Ethernet controller via the first TXD input and the first RXD output, wherein the module is configured to be coupled via the first TXD output and the first RXD input to a transceiver that can be coupled to bus lines, and wherein the method comprises the steps of (a) receiving an RXD input signal via the first RXD input of the module, wherein the RXD input signal represents a first Ethernet message, (b) detecting a predefined first pattern of the first Ethernet message based on the RXD input signal via the module, (c) generating a first instruction via the module for the transceiver to change from a first bus threshold voltage to a second bus threshold voltage in response to the detection of the first pattern, (d) detecting a predefined second pattern of the first Ethernet message based on the RXD input signal via the module, and (e) generating a second instruction via the module for the transceiver to change from the second bus threshold voltage to the first bus threshold voltage in response to the detection of the second pattern.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows a simplified diagram of communication layers.
Figure 2 shows a simplified block diagram of a PLCA cycle.
Figure 3 shows a simplified block diagram of a communication network.
Figure 4 shows a simplified block diagram of a module.
Figure 5 shows a simplified illustration of an Ethernet message.
Figure 6 shows simplified waveform examples.
Figure 7 shows a simplified flow chart of a method.

### DESCRIPTION OF EMBODIMENTS

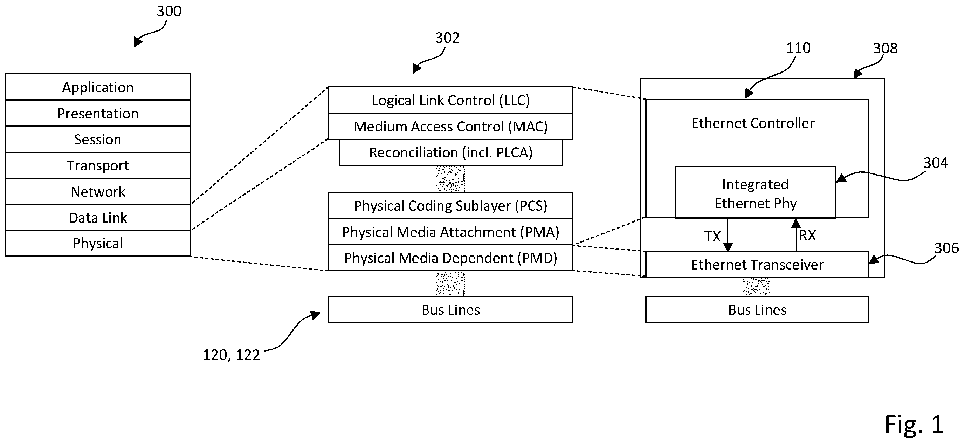

An OSI model for communication is shown schematically in Figure 1. The OSI model may be used for communication according to the 10BASE-T1S protocol and/or according to the CAN protocol. The lowest level of the OSI model refers to the physical layer. The second lowest level of the OSI model refers to the data link layer.

Figure 1 also schematically shows several sub-layers 302, which refer to the data link layer and the physical layer of the OSI model 300 if communication according to the 10BASE-T1S protocol is intended. The top two sub-layers, namely the logical link control (LLC) and the medium access control (MAC), are assigned to the data link layer of the OSI model 300. The other sublayers, namely the reconciliation, the physical coding sublayer (PCS), the physical media attachment (PMA), and the physical media dependent (PMD), are assigned to the physical layer of the OSI model 300.

In an example, it may be assumed that a controller 110, also referred to as a Ethernet controller 110, is configured to provide and/or have implemented the functions of the LLC sublayer, the MAC sublayer, the reconciliation sublayer, the PCS sublayer, and the PMA sublayer. In an example, it may be assumed that a transceiver 306, also referred to as a Ethernet transceiver 306 is configured to provide and/or have implemented the function of the PMD sublayer. The Ethernet transceiver 306 may also be referred to as "active front end" (AFE).

The Ethernet controller 110 may, in an example, have integrated at least a portion of an Ethernet physical layer, wherein this portion 304 may be configured to provide and/or have implemented the function of the PCS sublayer and the PMA sublayer. The Ethernet controller 110 may be configured to transmit a TX input signal in particular to the Ethernet transceiver 306. The Ethernet controller 110 may be configured to receive an RX output signal, in particular, from the Ethernet transceiver 306.

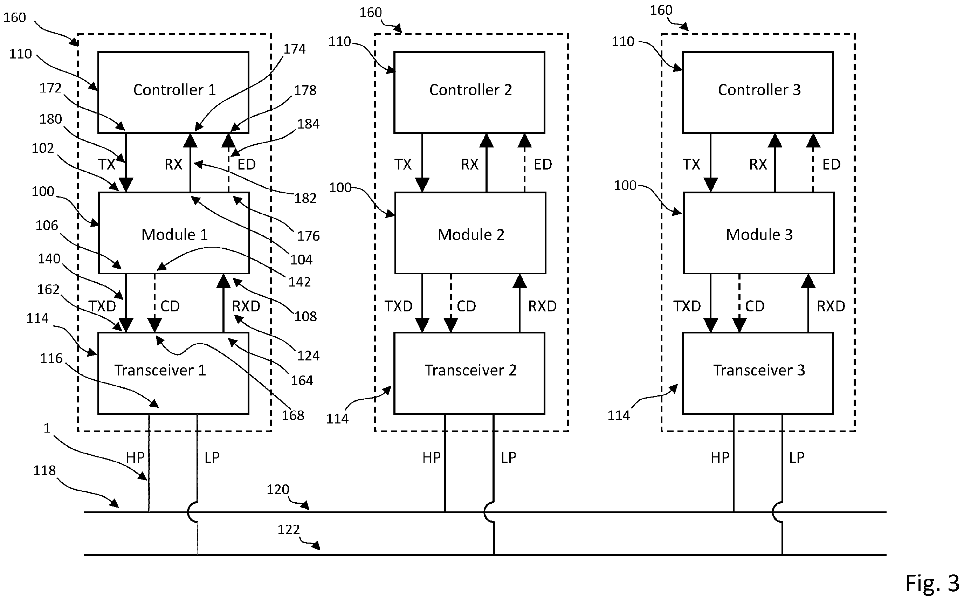

An example of an Ethernet transceiver 306 is schematically illustrated in Figure 3. In an example, an Ethernet node may comprise an Ethernet controller 110 and an Ethernet transceiver 306. In a so-called multi-drop environment, multiple Ethernet nodes 308 may be coupled together via bus lines 120, 122. A collision avoidance (PLCA) function may be provided in the reconciliation sublayer according to the 10BASE-T1S protocol. Based on the collision avoidance function, multiple Ethernet nodes 308 are prevented from accessing the bus lines 120, 122 simultaneously.

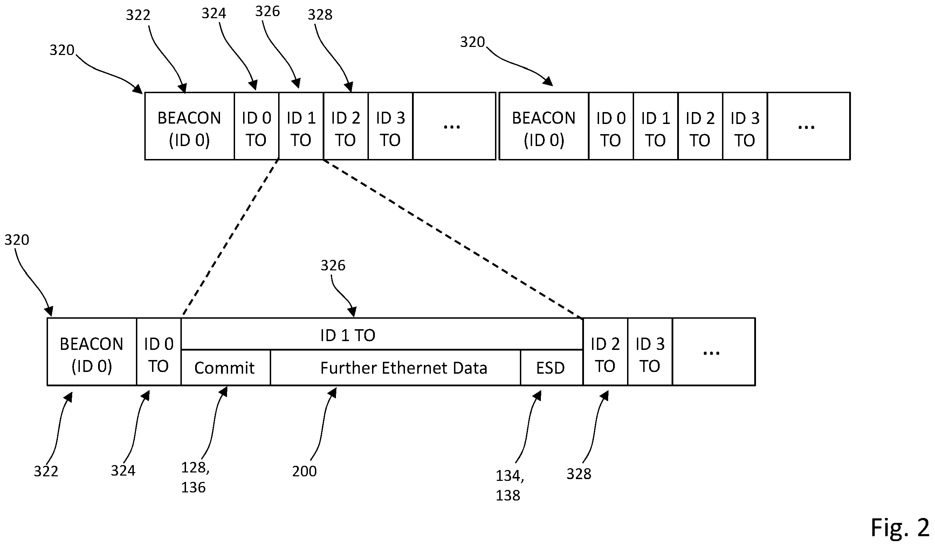

Figure 2 schematically illustrates an example of a PLCA cycle 320. The PLCA cycle 320 may begin with a beacon field 322. The beacon field 322 may be a predefined pattern of multiple bits. The beacon field 322 may be followed in sequence by a plurality of transmit opportunity fields 324, 326, 328. A transmit opportunity field 324, 326, 328 may therefore also be referred to and/or understood as a time slot. Each transmit opportunity field 324, 326, 328 may in particular be assigned to exactly one Ethernet controller 110 and/or Ethernet node 308. In an example, each Ethernet controller 110 and/or Ethernet node 308 is uniquely associated with exactly a single transmit opportunity field 324, 326, 328. The PLCA cycle 320 may repeat periodically.

Each transmit opportunity field 324, 326, 328 initially has a predefined dead time. The transmit opportunity field 324, 326, 328 may also be referred to as transmit opportunity 324, 326, 328. If an Ethernet controller 110 and/or an Ethernet node 308 does not wish to use the associated transmit opportunity 324, 328, the Ethernet controller 110 and/or the Ethernet node 308 may allow the dead time of the associated transmit opportunity 324, 326, 328 to elapse unused. If an Ethernet controller 110 and/or an Ethernet node 308 wishes to utilize the associated transmit opportunity 326 to transmit data, the Ethernet controller 110 and/or the Ethernet node 308 may begin transmitting data via the Ethernet transceiver 306 during the dead time of the associated transmit opportunity 326. For this purpose, the Ethernet controller 110 may generate a commit symbol 136. The commit symbol 136 may be a predefined pattern of bits. During the dead time of the associated transmit opportunity 326, the Ethernet controller 110 may transmit the commit symbol 136 via the TX input signal. By transmitting data, in particular by transmitting the commit symbol 136, the time of the assigned transmit opportunity 326 is extended so that further data can be transmitted by the Ethernet controller 110 via the TX input signal. The further data may be Ethernet data 200 and, in particular, a subsequent ESD pattern 138. When the ESD pattern 138 is sent, the associated transmit opportunity 326 ends. The ESD pattern 138 can be a predefined pattern of several bits.

According to the 10BASE-T1S protocol, differential Manchester encoding (DME) is used by the Ethernet controller 110 and/or the Ethernet transceiver 306 to represent bits by a voltage signal. The Ethernet transceiver 306 may be configured to generate a differential voltage signal on the bus 118 and/or between the bus lines 120, 122 to transmit data. The Ethernet transceiver 306 may be configured to measure a differential voltage signal from the bus 118 and/or between the bus lines 120, 122 and generate an RX input signal based on the data represented by the differential voltage signal, such that the RX input signal represents the data. The Ethernet transceiver 306 may comprise a RXD output. Further, the Ethernet transceiver 306 may be configured to transmit the RX input signal via the RXD output.

The differential voltage signal between the bus lines 120, 122 is also referred to as a bus signal. In simplified terms, data is encoded according to DME based on either a presence or absence of an abrupt transition of a voltage of the bus signal within a clock cycle. A logical 0-bit is represented during a clock cycle by the fact that there is no abrupt voltage transition of the voltage signal during the clock cycle. A logical 1-bit is represented during a clock cycle by the fact that there is an abrupt voltage transition of the voltage signal during the clock cycle. Further, it may be worth to mention that an abrupt transition in the voltage signal may be provided at each start of a clock cycle.

An unshielded, twisted pair of wires with a first bus line 120 and a second bus line 122 can be used for the bus lines 120, 122. Together, the two bus lines 120, 122 may be referred to as bus 118. If interference acts on the bus 118, interference signals may arise in the form of differential voltages between the two bus lines 120, 122. Due to the interference signals, there may be an unintentional step change in voltage of a differential voltage of the bus signal between the two bus lines 120, 122 that is sufficiently large so that the Ethernet transceiver 306 evaluates the interference as a representation of a logic 1-bit. The interference may therefore result in erroneous bits and/or erroneous data.

The module 100 described below offers at least indirectly the advantage that erroneous bits due to interference on the bus 120 can be avoided or reduced in a branched wire harness.

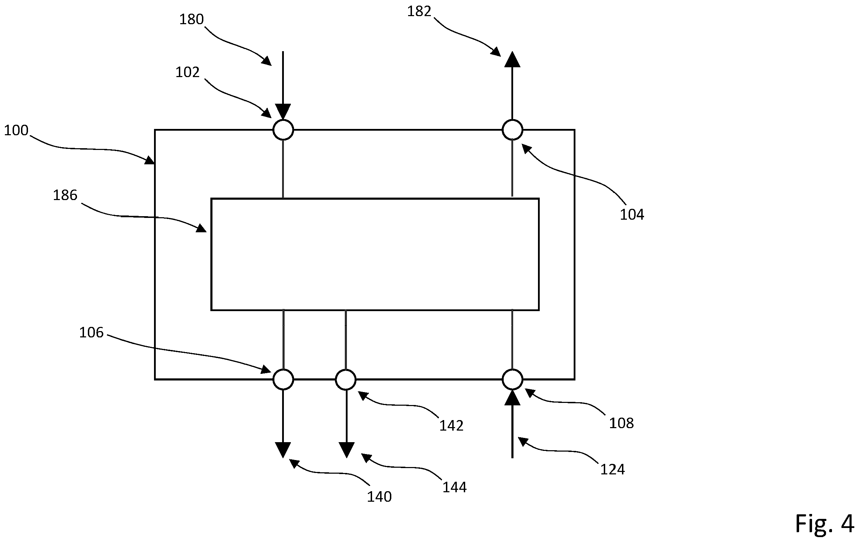

Figure 3 schematically illustrates an example of the module 100. Figure 4 schematically illustrates another example of the module 100. The following explanations may refer to both Figures 3, 4 or to one of the two Figures 3, 4 alone.

The module 100 comprises a first transmit data input 102 (first TX input) and a first receive data output 104 (first RX output). The first TX input 102 may also be referred to as a first TX input interface 102. The first RX output 104 may also be referred to as first RX output interface 104. The module 100 is configured to be coupled to the Ethernet controller 110 or an Ethernet PHY 304 via the first TX input 102 and the first RX output 104. The Ethernet PHY 304 may be a digital Ethernet PHY 304. The Ethernet PHY 304 may be integrated into the Ethernet controller 110. The Ethernet controller 110, in particular the associated Ethernet PHY 304, may comprise a second TX output 172. A signal connection may extend from the second TX output 172 to the first TX input 102 of the module 100 to transmit a TX input signal 180 from the second TX output 172 to the first TX input 102. The Ethernet controller 110, in particular the associated Ethernet PHY 304, may comprise a second RX input 174. A signal connection may extend from the first RX output 104 of the module 100 to the second RX input 174 of the Ethernet controller 110 to transmit an RX output signal 182 from the first RX output 104 to the second RX input 174.

The module 100 comprises a first transmit data output 106 (first TXD output) and a first receive data input 108 (first RXD input) 108. The first TXD output 106 may also be referred to as a first TXD output interface 106. The first RXD input 108 may also be referred to as first RX input interface 106. The module 100 is configured to be coupled to a transceiver 114 via the first TXD output 106 and the first RXD input 108. The transceiver 114 may comprise a bus interface 116. The transceiver 114 may be configured to be coupled via the bus interface 116 to a bus 118 comprising a first bus line 120 and a second bus line 122. The transceiver 114 may be configured to measure a differential voltage signal that is between the first and second bus lines 120, 122. The differential voltage signal may be referred to as a bus signal U_{bus}. The transceiver 114 may be configured to generate an RXD input signal 124 based on the measured bus signal U_{bus}. The transceiver 114 may be configured to generate the RXD input signal 124 such that the RXD input signal 124 represents data that is also represented by the measured bus signal U_{bus}. In an example, the bus signal may represent an Ethernet message 126. The transceiver 114 may be configured to generate the RXD input signal 124 based on the bus signal U_{bus} such that the RXD input signal 124 represents the Ethernet message 126.

The transceiver 114 may comprise a second receive data output 164 (second RXD output) and a second transmit data input 162 (second TXD input). A signal connection may extend from the second RXD output 164 of the transceiver 114 to the first RXD input 108 of the module 100. The transceiver 114 may be configured to transmit the RXD input signal 124 via the second RXD output 164, in particular to the first RXD input 108 of the module 100. A signal connection may extend from the first TXD output 106 of the module 100 to the second TXD input 162 of the transceiver 114. In an example, the module 100 may be configured to transmit a TXD output signal 140 via the first TXD output 106, in particular to the second TXD input 162 of the transceiver 114. In an example, the module 100 may be configured to generate the TXD output signal 140 based on the TX input signal 180. In an example, the module 100 may be configured to generate the RX output signal 182 based on the RXD input signal 124. The TX input signal 180 and/or the RX output signal 182. The TXD output signal 140 and/or the RXD input signal 124 may each be DME or NRZ encoded.

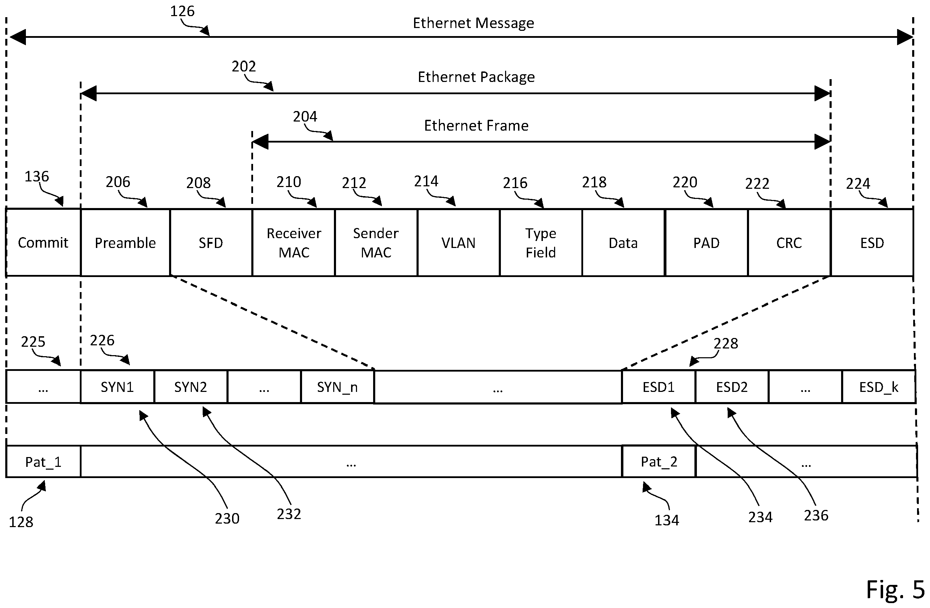

Figure 5 schematically illustrates an example of an Ethernet message 126 as may appear on the bus wires

In an example, the Ethernet message 126 comprises an Ethernet package 202 and an end-of-stream delimiter (ESD) field 224. The Ethernet message 126 may also comprise one or more commit symbols 136. In an example, the Ethernet package 202 follows directly the commit symbol 136, and the ESD field 224 directly follows the Ethernet package 202. Thus, the Ethernet message 126 may be defined by a sequence of: the commit symbol 136, the Ethernet package 202, and the ESD field 224.

The commit symbol 136 may also be referred to as a commit field. The commit symbol 136 may comprise a single bit or a predefined sequence of bits. The at least one bit of the commit symbol 136 constitute a bit pattern 225, which may also be referred to as the commit pattern 225.

In an example, the Ethernet package 202 comprises a preamble field 206, a start-of-frame-delimiter (SFD) field 208, and an Ethernet frame 204, which may be arranged in said sequence. In an example, the Ethernet frame 204 comprises a receiver mac field 210, a sender mac field 212, a VLAN field 214 (optional), a type field 216, a payload field 218, a PAD field 220, and a CRC field 222, which may be arranged in said sequence.

The preamble field 206 is used for synchronization. The preamble field 206 can comprise an alternating bit sequence, such as 10101010 ... 101010.

The start frame delimiter (SFD) field 208 may comprise a predefined bit sequence. In an example, the SFD field 208 comprises the bit sequence 10101011. In an example, the last two bits of the SFD field 208 may interrupt the preamble bit pattern to signal the start of the Ethernet frame 204.

The Receiver Mac field 210 can represent a destination address of a provider.

The Sender Mac field 212 can represent a source address of a subscriber.

The VLAN field 214 may also be referred to as a VLAN tag 214. The VLAN field 214 is optional. The VLAN field 214 may represent information about logical networks and/or about virtual local networks.

The type field 216 may also be referred to as ether type field 216. The type field 216 may represent a protocol of the next higher layer in OSI model 300.

The data field 218 may represent any user data and/or payload data.

A minimum size, for example 64 bytes, may be provided for the Ethernet frame 204. The PAD field 220 may be used to fill the Ethernet frame 204 to the minimum size if, for example, a data quantity of the data of the user data field 218 is too small. The PAD field 220 may comprise so-called fill bits.

The Cyclic Redundancy Check (CRC) field 222 may represent a CRC checksum. The CRC checksum may also be referred to as a frame check sequence (FCS).

The end of stream delimiter (ESD) field 224 forms the last field of the Ethernet message 126. The ESD field 224 may comprise at least one of the following bit patterns: ESD, ESDOK, ESDERR, ESDJAB. The bit patterns mentioned may correspond to the corresponding bit patterns according to the IEEE 802.3cg-2019 standard.

The Ethernet message 126 may be subdivided into a plurality of patterns 225, 226, 228. Each pattern 225, 226, 228 may comprise a predefined number of bits. In an example, the patterns 226, 228 of the Ethernet message 126, in particular except for the commit pattern 225, each comprise the same predefined number of bits, for example four (4) bits or five (5) bits.

The preamble field 206 may comprise multiple patterns 226. The first bits of the preamble field 206 may form a first pattern 226 of the preamble field 206. Subsequent bits of the preamble field may form a second pattern of the preamble field 206. In this way, the preamble field may comprise the multiple patterns 226. The first pattern 226 of the preamble field 206 may form a first synchronization pattern 230. The next pattern of the preamble field 206 may form a second synchronization pattern 232.

The ESD field 224 may comprise multiple patterns 228. The first bits of the ESD field 224 may form a first pattern 228 of the ESD field 224. Subsequent bits of the ESD field 224 may form a second pattern of the ESD field 224. In this way, the ESD array 224 may comprise the multiple patterns 228. The first pattern 228 of the ESD array 224 may form a first ESD pattern 234. The next pattern of the ESD array 224 may form a second ESD pattern 236.

Previously, it was explained that the module 100 is configured to receive an RXD input signal 124 via the first RXD input 108. The RXD input signal 124 may represent an Ethernet message 126, which is referred to as a first Ethernet message 126. The module 100 is further configured to detect a predefined pattern 128, referred to as a first reference pattern 128, of the first message 126. In an example, the first reference pattern 128 may be predefined either according to a pattern 226 of the preamble field 206 of the first Ethernet message 126 or according to a pattern 225 of the commit symbol 136 of the first Ethernet message 126. In an example, the first reference pattern 128 may be predefined according to the first synchronization field 230 of the preamble field 206 of the first Ethernet message 126. The first synchronization field 230 may be a predefined sequence of bits. This sequence of bits may define in an example the sequence of bits of the first reference pattern 128. In another example, the first reference pattern 128 may be predefined according to the commit field 136 of the first Ethernet message 126. The commit field 136 may be defined by a predefined single bit or may be defined by a predefined sequence of bits. The single bit or the sequence of bits may define in an example the first reference pattern 128. In a further example the first synchronization pattern 226 might be represented by the same bit sequence like a commit pattern 225.

In an example, the module 100 may be configured to compare patterns 225, 226, 228 of the first Ethernet message 126 to the first reference pattern 128 to determine whether the first reference pattern 128 is comprised by the first Ethernet message 126.

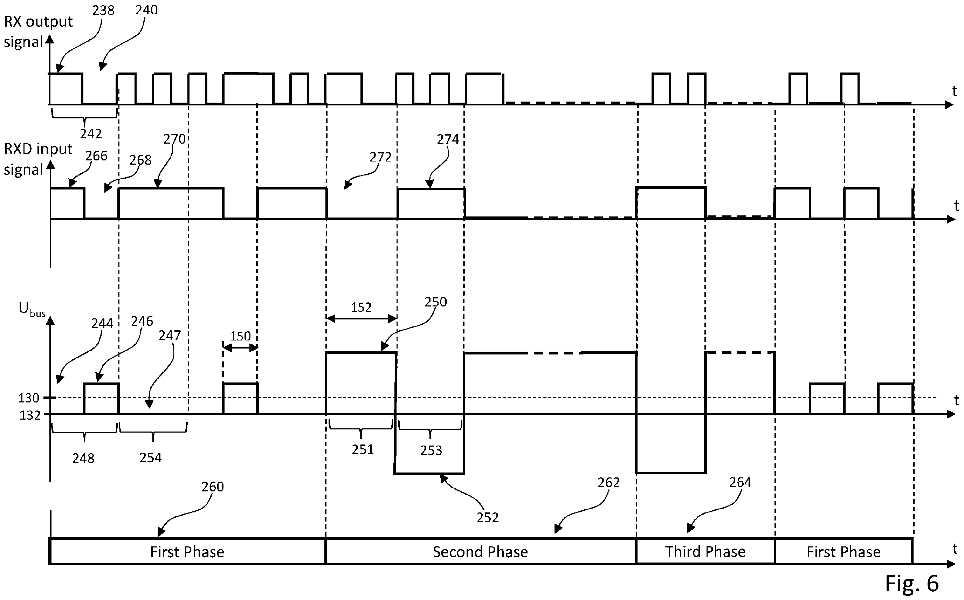

Figure 6 schematically illustrates an example of the differential voltage waveform of the bus signal U_{bus}.

The transceiver 114 may be configured to receive the bus signal U_{bus} via the bus interface 116. The transceiver 114 may be configured to detect a symbol 244, 246 represented by the bus signal U_{bus} by comparing the bus voltage U_{bus} to a threshold voltage. The threshold voltage may also be referred to as a detection threshold voltage.

If no reception is ongoing, the detection threshold voltage may be selected to be significantly above zero volts in order to detect the start of a first symbol reliably. In an example, a first bus threshold voltage 130 may be between +0.3 V and +0.9 V.

In an example, the bus voltage U_{bus} is 0 V during a first symbol 244. During a second symbol 246, the bus voltage U_{bus} may be 1 V. The transceiver 114 may detect an abrupt voltage change and/or abrupt transition from the first symbol 244 to the second symbols 246 by comparing the bus voltage U_{bus} to the first threshold voltage 130. In an example, the step change in voltage and/or the step transition from the first symbol 244 to the second symbol 246 occurs during a first clock cycle 248. It was previously explained that according to the DME coding, a logic 1-bit is represented during a clock cycle by the presence of a step voltage transition of the bus signal during the clock cycle. The abrupt transition from the first symbol 244 to the second symbol 246 or the associated abrupt voltage change represents the start of a transmission.

In an example, the bus voltage U_{bus} is unchanged during a second clock cycle 254. For example, the bus voltage U_{bus} may be at 0 V or below during the entire second clock cycle 254. It was previously explained that, according to the DME coding, a logical 0-bit during a clock cycle is represented by the fact that there is no abrupt voltage change in the bus signal during the clock cycle. The unchanged bus voltage U_{bus} during the second clock cycle 254 can therefore represent a 0-bit.

The first bus threshold voltage 130 may be used by the transceivers 114 to detect the step voltage change in the bus signal U_{bus}. The bus signal U_{bus} is the differential voltage signal between the two bus lines 120, 122. If interference is applied to the bus 118, the interference may cause spurious voltages between the two bus lines 120, 122. In an unfavorable case, the interference voltage may be greater than the first threshold voltage 130, so that in this case the interference voltage may be measured by the transceiver 114 as an abrupt voltage change. If the spurious voltage occurs during a clock cycle 254 instead of at the beginning or end, the spurious voltage may cause faulty representation of a logic 1-bit due to the bus signal U_{bus} is raising above or falling below the first threshold voltage 130, when in fact a logic 0-bit should have been represented by the bus signal U_{bus} during the second clock cycle 254. Therefore, when using DME coding, interference voltages may result in erroneous detection of bits based on the bus signal U_{bus}.

The present description is based on the consideration that a second threshold closer to or at 0 V is advantageous for decoding information conveyed by the bus signal U_{bus}.

The present description is also based on the consideration that first threshold voltage 130 may be suitable for achieving precise synchronization of the transceiver 114 to the first and second clock cycle 248, 254. Further, the second threshold voltage 132 may be suitable for achieving a precise synchronization of the transceiver 114 to clock cycles 251, 253.

The present description is also based on a further consideration that the transceiver 114 is not configured to perform an evaluation of bits or bit sequences, in particular patterns. Against this background, in an example, the module 100 could be used to control the transceiver 114 such that the transceiver 114 first detects at least one symbol 244, 246, 247 corresponding to a predefined bit pattern of an Ethernet message 126 based on the bus signal U_{bus} using the first threshold voltage 130, and that the transceiver 114 is subsequently controlled by the module 100 such that the transceiver 114 detects further symbols based on the bus signal U_{bus} using the second threshold voltage 132. At the end of the Ethernet message 126, the module 100 could control the transceiver 114 such that the transceiver 114 changes the detection threshold voltage back to the first threshold voltage 130.

Previously, it was explained that the module 100 is configured to detect the predefined first reference pattern 128 in the first Ethernet message 126 if the first Ethernet message 126 comprises a pattern 225, 226 that corresponds to the first reference pattern 128. In this case, the first Ethernet message 126 may comprise the predefined first reference pattern 128.

The module 100 is further configured to generate a first instruction for the transceiver 114 in response to detecting the first reference pattern 128. The first instruction may be an instruction for the transceiver 114. The transceiver 114 may, in response to receiving the first instruction, change the detection threshold voltage for detecting a symbol 244, 246, 247, 250, 252 represented by the bus signal U_{bus} from the first bus threshold voltage 130 to the second bus threshold voltage 132.

In an example shown in Figure 6, the transceiver 114 may detect the first symbols 244, 246, 247 representing the first bits of the first reference pattern 128 during the first clock cycles 248, 254. At the same time, by detecting the first symbols 244, 246, 247, the module 100 may perform precise synchronization with respect clock cycle of the bus signal U_{bus}.

The detection of the first bits of the first reference pattern 128 may be performed during a first phase 260 via the module 100. If the module 100 has detected the first reference pattern 128, the module 100 may transmit the first instruction, for example via the first TXD output 140, to the transceiver 114. In response to receiving the first instruction, the transceiver 114 may lower the detection threshold voltage from the first bus threshold voltage 130 to the second bus threshold voltage 132. The second bus threshold voltage 132 is preferably smaller than the first bus threshold voltage 130. The second bus threshold voltage in combination with bits not being represented by a 0V symbol may increase a data rate and/or may increase a disturbance robustness.

The change in the detection threshold voltage from the first bus threshold voltage 130 to the second bus threshold voltage 132 provides the possibility that the coding of the bits represented by the bus signal U_{bus} also changes with the change in the detection threshold voltage. In an example, the bits represented by the bus signal U_{bus} of the first Ethernet message 126 following the first reference pattern 128 may be encoded according to Not-Return-to-Zero (NRZ). In an example shown in Figure 6, the symbols 250, 252 may be encoded according to NRZ, with the symbol 250 representing, for example, a logic 1 bit and the symbol 252 representing, for example, a logic 0-bit. The lower numbers of transitions per time interval in NRZ provides a greater robustness to interference on the bus 118. As an effect, much of the data in the Ethernet message 126 may be transmitted over the bus 118 in the NRZ encoding, while being robust to disturbance on the bus 118.

The module 100 is also configured to detect a predefined second pattern 134, referred to as the second reference pattern 134, of the first Ethernet message 126. In an example, the second reference pattern 134 may be predefined according to a pattern 228 of the ESD field 224 of the first Ethernet message 126. In an example, the second reference pattern 134 may be predefined according to one of the ESD bit patterns 234, 236 of the ESD field 224 of the first Ethernet message 126. Each ESD bit pattern may be defined as a predefined sequence of bits. The ESD field 224 represents the last data of the Ethernet message 126. Using one of the ESD bit patterns 234, 236 of the ESD field 224 as a template for the second reference pattern 134 provides the advantage that a change in the detection threshold voltage does not occur until the end of the transmission of the Ethernet message 126. As an effect, between the first reference pattern 128 of the first Ethernet message 126 and the second reference pattern 134 of the Ethernet message 126, a majority of the bits or data of the Ethernet message 126 may be transmitted over the bus 118 in accordance with NRZ coding.

The module 100 is further configured to generate a second instruction for the transceiver 114 in response to detecting the second reference pattern 134. The second instruction may be an instruction for the transceiver 114. The transceiver 114 may, in response to receiving the second instruction, change the detection threshold voltage for detecting a symbol 244, 246, 247, 250, 252 represented by the bus signal U_{bus} from the second bus threshold voltage 132 to the first bus threshold voltage 130.

Detection of the bits of the second reference pattern 134 may be performed during a third phase 264 via the module 100. If the module 100 has detected the second reference pattern 134, the module 100 may transmit the second instruction, for example via the first TXD output 140, to the transceiver 114. In response to receiving the second instruction, the transceiver 114 may increase the detection threshold voltage from the second bus threshold voltage 132 to the first bus threshold voltage 130.

In an example, the transceiver 114 may be formed by a CAN XL transceiver. By using the CAN XL transceiver to transmit an Ethernet message 126, both the aforementioned benefits of disturbance robust transmission can be achieved while saving hardware development costs. The Ethernet controller 110 can be configured according to the Ethernet standard as explained above.

Figure 4 schematically illustrates an example of the module 100. The module 100 may comprise a processing unit 186. The processing unit 186 may be coupled to the first RXD input 108 and the RX output 182. The RXD input signal 124 may be transmitted to the processing unit 186 via the coupling to the RXD input 108. The processing unit 186 may be configured to generate the RX output signal 182. The processing unit 186 may be configured to detect the first reference pattern 128 and/or to detect the second reference pattern 134. The processing unit 186 may be coupled to the first TXD output 106. The processing unit 186 may be configured to generate the first instruction and/or the second instruction. The first instruction and/or the second instruction may each be a dedicated message comprising a predefined sequence of bits.

In an example, the first TX input 102 may be coupled to the processing unit 186. In an example, the processing unit 186 may further be coupled to the first TXD output 106. The processing unit 186 may be configured to receive the TX input signal 180 via the first TX input 102 and transmit the TXD output signal 140 via the first TXD output 106. In an example, the module 100, in particular the associated processing unit 186, may be configured to adapt the TXD output signal 140 such that the TXD output signal 140 further represents the first instruction and/or the second instruction. As an effect, the module 100 may control the transceiver 114 using the first instruction and/or the second instruction via the first TXD output 106 and/or via the TXD output signal 140.

In an example, the module 100 may comprise a first control interface 142. In an example, the first control interface 142 may be provided for transmitting the first instruction and/or the second instruction. In an example, the module 100 and/or the processing unit 186 may be coupled to the control interface 142. Further, the module 100 and/or the processing unit 186 may be configured to generate a control signal 144 representing the first instruction and/or the second instruction. The module 100 and/or the processing unit 186 may further be configured to transmit the control signal 144 via the first control interface 142, for example to the transceiver 114.

Figure 6 schematically illustrates an example of the bus signal U_{bus}. In the first phase 260, the bits represented by the bus signal U_{bus} may be encoded according to DME. In the clock cycle 248, two symbols 244, 246 are represented by the bus signal U_{bus}, which together can represent a logical 1-bit according to the DME coding. In the subsequent clock cycle 254, a single symbol 247 is represented by the bus signal U_{bus}, which can represent a logical 0-bit according to the DME coding.

The transceiver 114 may be configured to receive the bus signal U_{bus} via the bus interface 116. The transceiver 114 may further be configured to generate the RXD input signal 124 based on the bus signal U_{bus}. In the first phase 260, the bits represented by the RXD input signal 124 may be encoded according to DME.

In the second phase 262, the bits represented by the bus signal U_{bus} may be coded according to NRZ. In the clock cycle 251, a single symbol 250 is represented by the bus signal U_{bus}, wherein the associated differential voltage during the clock cycle 251 is always greater than the second threshold voltage 132. In the clock cycle 251, a logical 1-bit can be represented by the symbol 250 in accordance with the NRZ coding. In the subsequent clock cycle 253, a further single symbol 252 is represented by the bus signal U_{bus}, wherein the associated differential voltage during the clock cycle 253 is always less than the second threshold voltage 132. In the clock cycle 253, the symbol 252 may represent a logical 0-bit according to the NRZ coding.

In an example, the transceiver 114 may be configured to generate the RXD input signal 124 based on the bus signal U_{bus} such that the respective encoding is preserved. As an effect, bits of the Ethernet message 126 represented by the RXD input signal 124 may be encoded according to DME if the corresponding bits from the bus signal U_{bus} are also encoded according to DME. As a further effect, bits of the Ethernet message 126 represented by the RXD input signal 124 may be encoded according to NRZ if the corresponding bits from the bus signal U_{bus} are also encoded according to NRZ. In an example, bits of the Ethernet message 126 represended by the bus signal U_{bus} and/or the RXD input signal 124 may be encoded according to DME during the first phase 260 and encoded according to NRZ during the second and third phases 262, 264.

In an example, the module 100, in particular the processing unit 186, is configured to receive the RXD input signal 124 via the first RXD input 108. Further, the module 100 may be configured to detect the symbols 266-274 of the RXD input signal 124. The symbols 266-274 of the RXD input signal 124 may also be referred to as RXD symbols 266-274. The RXD symbols 266-274 may correspond to the symbols 244, 246, 247, 250, 252 of the bus signal U_{bus}.

In an example, the module 100 may be configured to decode the bits of the Ethernet message 126 represented by the RXD symbols 266-274 based on an encoding scheme. The encoding scheme may also be referred to as an RXD encoding scheme.

In the example shown in Figure 6, bits of the Ethernet message 126 may be encoded by RXD symbols 266-270 according to DME during the first phase 260 and encoded by RXD symbols 272, 274 according to NRZ during the second and third phases 260, 264. In an example, the module 100 may be configured to change the RXD encoding scheme from DME to NRZ during the transition from the first phase 260 to the second phase 262. Further, in an example, the module 100 may be configured to change the RXD coding scheme from NRZ to DME at the end of the third phase 264.

In an example shown in Figure 6, it was previously explained that the coding scheme may be changed by the module 100. The two encodings, DME and NRZ, were mentioned as examples. In principle, other combinations of different coding schemes can also be used depending on the application.

In an example, the module 100 is configured to change the RXD coding scheme from a first predefined coding scheme, such as DME, to a second predefined coding scheme, such as NRZ, in response to detecting the first pattern 128 (see Figure 5). In an example, the module 100 may further be configured to change the RXD coding scheme from the second predefined coding scheme to the first predefined coding scheme in response to detecting the second pattern 134.

In an example, the module 100 may be configured to decode all of the RXD bits of the Ethernet message 126 represented by the RXD input signal 124. Figure 6 schematically illustrates an example of the RX output signal 182. In an example, the module 100, in particular the processing unit 186, is configured to generate the RX output signal 182 based on the RXD input signal 124. Previously, it was explained that the RXD bits may be represented by the RXD input signal 124 according to two different coding schemes. However, for the RX output signal 182, it is advantageous if the RXD bits are represented according to a single coding scheme, in particular according to DME. The use of a single coding scheme provides the advantage that the RX output signal 182 may be transmitted to an Ethernet controller 110, which may be configured to decode the RX output signal 182.

In an example, the module 100, in particular the processing unit 186, is configured to generate the RX output signal 182 based on the previously encoded RXD bits such that the RXD bits are represented by the RX output signal 182 according to a single encoding scheme, in particular according to the first encoding scheme. Furthermore, the module 100, in particular the processing unit 186, may be configured to transmit the RX output signal 182 via the RX output 104, in particular to the Ethernet controller 110. As an effect, the RXD bits may be represented by the RX output signal 182 according to the first coding scheme, in particular DME, even if the RXD bits are represented by the RXD input signal 182 in two different coding schemes, in particular DME and NRZ.

In connection with Figure 6, it has already been explained for the example of the bus signal U_{bus} that two symbols 244, 246 can be represented by the bus signal U_{bus} in the clock cycle 248, which together represent a logical 1-bit according to DME. Similarly, two symbols 266, 268 may be represented by the RXD input signal 124, which together represent a logic 1-bit according to DME.

In an example, the module 100 is configured to detect symbols 266-274 of the RXD input signal 124 at a detection frequency. Depending on the desired transmission rate and/or depending on the particular encoding scheme, changing the detection frequency may be advantageous.

In an example, the module 100 is configured to change the acquisition frequency from a first predefined clock frequency to a second predefined clock frequency in response to detecting the first reference pattern 128. The first clock frequency may be between 2 MHz and 7 MHz. In an example, the first clock frequency is 5 MHz. The second clock frequency may be between 8 MHz and 14 MHz. In an example, the second clock frequency is 12.5 MHz. The module 100 may further be configured, in an example, to change the detection frequency from the second clock frequency to the first clock frequency in response to detecting the second reference pattern 134. As an effect, the data in the second and third phases 262, 264 may be both more robust to interference and transmitted at a high transmission rate.

It was previously explained that the module 100 may be coupled to the transceiver 114. The transceiver 114 may comprise a second TXD input 162, which may be coupled to the TXD output 106 of the module 100. Based on this coupling, the TXD output signal 140 may be transmitted from the module 100 to the transceiver 114. The transceiver 114 may further comprise a second RXD output 164, which may be coupled to the first RXD input 108 of the module 100. This coupling may be used to transmit the RXD input signal 124 from the transceiver 140 to the module 100.

In an example, the transceiver 114 may be configured to receive the first and/or second instruction via the TXD output signal 140. In another example, the transceiver 114 may comprise a second control input 168 that may be coupled to the first control output 142 of the module 100. The module 100 may be configured to transmit a control signal to the transceiver via the control output 142. The control signal may represent the first and/or second instruction. The transceiver 114 may be configured to receive the first and/or second instruction via the control signal.

In an example, the transceiver 114 is configured to change the detection threshold voltage for detecting a symbol 244, 246, 247, 250, 252 represented by the bus signal U_{bus}. The transceiver 114 may further be configured to change the detection threshold voltage from the first bus threshold voltage 130 to the second bus threshold voltage 132 in response to receiving the first instruction. Further, the transceiver 114 may be configured to change the detection threshold voltage from the second bus threshold voltage 132 to the first bus threshold voltage 130 in response to receiving the second instruction.

In an example, both, the module 100 and the transceiver 114, may be a part of a device.

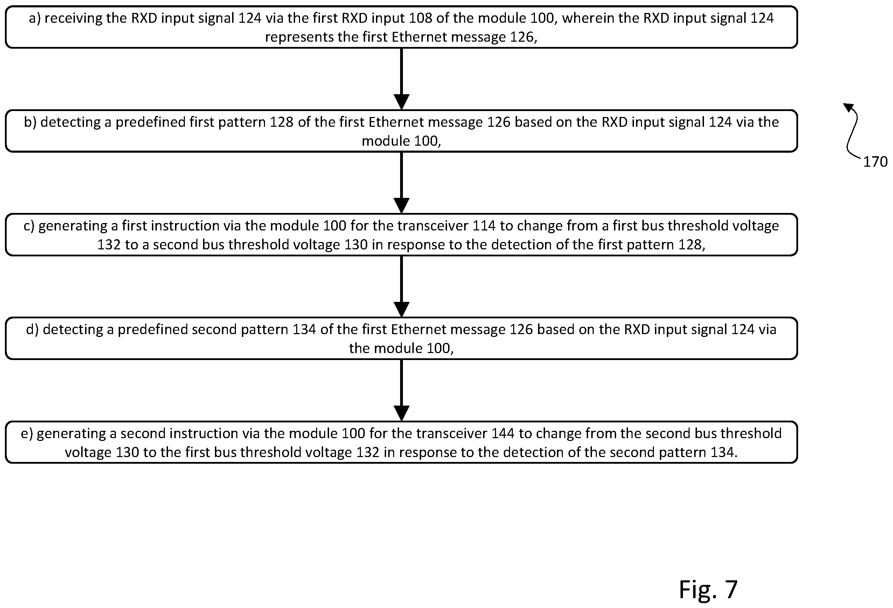

Figure 7 schematically illustrates an example of a method 170 for the module 100. The method comprises the steps:
a) receiving the RXD input signal 124 via the first RXD input 108 of the module 100, wherein the RXD input signal 124 represents the first Ethernet message 126,
b) detecting a predefined first pattern 128 of the first Ethernet message 126 based on the RXD input signal 124 via the module 100,
c) generating a first instruction via the module 100 for the transceiver 114 to change from a first bus threshold voltage 130 to a second bus threshold voltage 132 in response to the detection of the first pattern 128,
d) detecting a predefined second pattern 134 of the first Ethernet message 126 based on the RXD input signal 124 via the module 100, and
e) generating a second instruction via the module 100 for the transceiver 144 to change from the second bus threshold voltage 132 to the first bus threshold voltage 130 in response to the detection of the second pattern 134.

With respect to the method 170, reference is made in an analogous manner to the explanations, features, technical effects and advantages as discussed in connection with the module 100 and/or transceiver 114.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A module comprising:
a first transmit data input, TX input,
a first receive data output, RX output,
a first transmit data output, TXD output, and
a first receive data input, RXD input,
wherein the module is configured to be coupled to an Ethernet controller or a digital Ethernet Phy via the first TX input and the first RX output,
wherein the module is configured to be coupled via the first TXD output and the first RXD input to a transceiver that can be coupled via a bus interface to bus lines,
wherein the module is configured to receive, via the first RXD input, an RXD input signal representing a first Ethernet message,
wherein the module is configured to detect a predefined first pattern of the first Ethernet message based on the RXD input signal,
wherein the module is configured to generate, in response to the detection of the first pattern, a first instruction for the transceiver to change a detection threshold voltage for detecting a symbol from a first bus threshold voltage to a second bus threshold voltage,
wherein the module is configured to detect a predefined second pattern of the first Ethernet message based on the RXD input signal, and
wherein the module is configured to generate, in response to the detection of the second pattern, a second instruction for the transceiver to change the detection threshold voltage from the second bus threshold voltage to the first bus threshold voltage.

2. The module according to the preceding claim, wherein the first pattern of the first Ethernet message is a commit request symbol.

3. The module according to any of the preceding claims, wherein the second pattern of the first Ethernet message is an End-of-Stream Delimiter, ESD, bit-pattern.

4. The module according to any of the preceding claims, wherein the first bus threshold voltage is between 0.3 volts and 0.9 volts, and wherein the second bus threshold voltage is between -0.1 volts and 0.1 volts.

5. The module according to any of the preceding claims, wherein the module is configured to transmit a TXD output signal via the first TXD output, wherein the module is configured to adapt the TXD output signal such that the TXD output signal represents the first and/or second instruction.

6. The module according to any of the preceding claims, wherein the module comprises a first control interface, wherein the module is configured to generate a control signal representing the first and/or second instruction, wherein the module is configured to transmit the control signal via the first control interface.

7. The module according to any of the preceding claims, wherein the module is configured to detect symbols of the RXD input signal at a detection frequency, wherein the module is configured to change, in response to the detection of the first pattern, the detection frequency from a first clock frequency to a second clock frequency, and wherein the module is configured to change, in response to the detection of the second pattern, the detection frequency from the second clock frequency to the first clock frequency.

8. The module according to the preceding claim, wherein the first clock frequency is between 2 MHz and 7 MHz, and wherein the second clock frequency is between 8 MHz and 14 MHz.

9. The module according to any of the preceding claims 5 to 6, wherein the module is configured to detect RXD-symbols of the RXD input signal, and wherein the module is configured to decode RXD-bits represented by the symbols of the RXD input signal based on a RXD-coding scheme.

10. The module according to any of the preceding claims, wherein the module is configured to decode RXD-bits represented by the RXD input signal according to a/the RXD coding-scheme, wherein the module is configured to change, in response to the detection of the first pattern, the RXD coding-scheme from a first coding-scheme to a second coding-scheme, wherein the module is configured to change, in response to the detection of the second pattern, the RXD coding-scheme from the second coding-scheme to the first coding-scheme for decoding detected symbols of the RXD input signal.

11. The module according to the preceding claim, wherein the module is configured to create an RX output signal based on the decoded RXD-bits, such that the RXD-bits are represented by the RX output signal according to the first coding-scheme, and wherein the module is configured to transmit the RX output signal via the RX output.

12. A device comprising: a transceiver, and a module according to any of the preceding claims, wherein the transceiver comprises a bus interface for connecting to bus lines, wherein the transceiver comprises a second TXD input coupled to the first TXD output of the module, wherein the transceiver comprises a second RXD output coupled to the first RXD input of the module, wherein the transceiver is configured to receive, via the bus interface, a bus signal representing the first Ethernet message, wherein the transceiver is configured to generate the RXD input signal such that the RXD input signal represents the first Ethernet message, wherein the transceiver is configured to transmit the RXD input signal to the first RXD input of the module via the second RXD output of the transceiver, wherein the transceiver is configured to receive the first instruction and the second instruction from the module, wherein the transceiver is configured to change a detection threshold voltage for detecting a symbol represented by the bus signal, wherein the transceiver is configured to change the detection threshold voltage from the first bus threshold voltage to the second bus threshold voltage in response to receiving the first instruction, and wherein the transceiver is configured to change the detection threshold voltage from the second bus threshold voltage to the first bus threshold voltage in response to receiving the second instruction.

13. The device according to any of the preceding claims, wherein the first bus threshold voltage is between 0.3 volts and 0.9 volts, and wherein the second bus threshold voltage is between -0.1 volts and 0.1 volts.

14. The device according to any of the preceding claims, wherein the transceiver is configured to receive the first and/or second instruction via the TXD output signal of the module at the second TXD input, or wherein the transceiver comprises a second control interface and is configured to receive the first and/or second instruction via the control signal of the module at the second control interface.

15. A method for a module comprising a first transmit data input, TXD input, a first receive data output, RXD output, a first transmit data output, TXD output, and a first receive data input, RXD input, wherein the module is configured to be coupled to an Ethernet controller via the first TXD input and the first RXD output, wherein the module is configured to be coupled via the first TXD output and the first RXD input to a transceiver that can be coupled to bus lines, and wherein the method comprises the steps of
a) receiving an RXD input signal via the first RXD input of the module, wherein the RXD input signal represents a first Ethernet message,
b) detecting a predefined first pattern of the first Ethernet message based on the RXD input signal via the module,
c) generating a first instruction via the module for the transceiver to change from a first bus threshold voltage to a second bus threshold voltage in response to the detection of the first pattern,
d) detecting a predefined second pattern of the first Ethernet message based on the RXD input signal via the module, and
e) generating a second instruction via the module for the transceiver to change from the second bus threshold voltage to the first bus threshold voltage in response to the detection of the second pattern.
